Europäisches Patentamt

European Patent Office

Office européen des brevets

(11) Veröffentlichungsnummer: **0 018 574**

**A2**

(12) **EUROPÄISCHE PATENTANMELDUNG**

(21) Anmeldenummer: **80102147.8**

(22) Anmeldetag: **22.04.80**

(51) Int. Cl.³: **F 16 D 27/10**

(30) Priorität: **30.04.79 DE 2917548**

(43) Veröffentlichungstag der Anmeldung:
**12.11.80 Patentblatt 80 23**

(84) Benannte Vertragsstaaten:
**BE CH FR GB LI**

(71) Anmelder: **Agfa-Gevaert AG, Leverkusen
Camerawerk Postfach
D-8000 München 90(DE)**

(72) Erfinder: **Geisslinger, Wolfgang
Langbürgener Strasse 6
D-8000 München 90(DE)**

(72) Erfinder: **Pustka, Karel
Bozener Strasse 7
D-8000 München 90(DE)**

(72) Erfinder: **Brönner, Hermann
Am Blankstadl 2
D-8000 München 90(DE)**

(72) Erfinder: **Müllritter, Ludwig
Swakopmunder Strasse 2
D-8000 München 82(DE)**

(72) Erfinder: **Vondrowski, Gabriel
Schellingstrasse 84
D-8000 München 40(DE)**

(54) **Elektromagnetische, schleifringlose Kupplung.**

(57) Der Stator (7) einer elektromagnetischen, schleifringlosen Kupplung von kompakter Bauart und hoher Verschleißfestigkeit ist in einer Nut (5b) des Rotors (5) gelagert, welche ihn U-förmig umschließt und welche nach außen durch einen radialen Flansch (7a) des Stators abgeschlossen ist. Der Flansch des Stators nimmt den vollen in radialer Richtung durch den Stator fließenden Magnetfluß auf, während der größte Teil des axialen Magnetflusses durch den Rotor geht, so daß die in axialer Richtung zwischen Rotor und Stator auftretenden Magnetkräfte klein bleiben. Die Rückwand der U-förmigen Nut des aus ölgetränktem Sintereisen gefertigten Rotors (5) trägt die mit dem Magnetanker (11) zusammenwirkende Reibfläche und ist mit einer Einengung versehen, welche den Magnetfluß durch den Anker leitet. Der außenliegende Stator (7) ist zur Verbesserung seines Korosionsverhaltens aus dampfgetränktem Sintereisen hergestellt.

AGFA-GEVAERT AG - LEVERKUSEN      – 1 –

Camera-Werk München
Patent- und Lizenzwesen

30. 4. 1979

CW 2252.6 PU/MU                   10-bg-ja, 0734A


## Elektromagnetische, schleifringlose Kupplung

Die Erfindung betrifft eine elektromagnetische, schleifringlose Kupplung mit einem feststehenden, die Magnetspule
tragenden Stator, einem mit einem ersten umlaufende Teil
verbundenen Rotor und einem mit einem koaxial mit dem
ersten umlaufenden Teil gelagerten zweiten umlaufenden
Teil drehfest und längsverschieblich verbundenen Magnetanker, wobei Stator, Rotor und Magnetanker so angeordnet
und geformt sind, daß der von der Magnetspule erzeugte
Magnetfluß in einem geschlossenen Kreislauf durch sie
fließt und durch die dabei entstehenden Anziehungskräfte
eine ringförmige Reibfläche des Magnetankers mit einer
ringförmigen Reibfläche des Rotors in Wirkverbindung
bringt.

Eine derartige Kupplung ist u. a. Gegenstand der
DE-OS 26 28 246. Es ist das Ziel der vorliegenden Erfindung, eine Kupplung dieser Art in der Weise zu verbessern, daß sie bei geringem Fertigungsaufwand und kleinen baulichen Abmessungen einen hohen Wirkungsgrad und
eine große Verschleißfestigkeit aufweist. Erreicht wird
dies erfindungsgemäß dadurch, daß der Stator in einer Nut
des Rotors gelagert ist, welche den Stator U-förmig umschließt, daß auf dem Stator eine ringförmige Magnetspule
aufgesteckt ist, daß die den Stator und die ringförmige
Magnetspule umschließende, U-förmige

Nut des Rotors nach außen durch einen radialen Flansch des
Stators abgeschlossen ist, und daß der die Rückwand der
U-förmigen Nut des Rotors bildende Rotorteil mit den
Magnetfluß einengenden Aussparungen versehen ist und an
seiner Außenseite die mit dem Magnetanker zusammenwirkende
Reibfläche trägt. Vorzugsweise bilden dabei die die
Magnetspule umschließenden Teile des Stators und des Rotors einen Leiter von im wesentlichen konstanten Querschnitt für den Magnetfluß, und die Breite des die U-förmige Nut des Rotors nach außen abschließenden radialen
Flansches des Stators entspricht für sich allein etwa der
vollen Breite des für den Magnetfluß ringsum die Magnetspule zur Verfügung stehenden Querschnittes, während der
die Spule tragende, sich rohrförmig in axialer Richtung
erstreckende Statorteil nur einen kleiner Teil des durch
Stator und Rotor fließenden Magnetflusses aufnimmt.

Durch diese Anordnung und Formgebung des Rotors und des
Stators wird mit einfachen Mitteln ein sehr effektiver
Magnetfluß rund um die zur Erzeugung der Kupplungskräfte
dienende Magnetspule gewährleistet. Die Kupplung kann dadurch bei kleinen Abmessungen und kleinem Stromverbrauch
relativ hohe Kupplungsmomente übertragen. Der den Rotor in
radialer Richtung voll und in axialer Richtung nur teilweise durchflutende Magnetfluß kann auf den Stator nur eine relativ geringe axiale Magnetkraft ausüben, so daß die
am Stator während der Schaltzeiten der Kupplung entstehende Verlustleistung klein bleibt.

Durch die DE-OS 16 13 310 ist es grundsätzlich schon bekannt, Teile einer Magnetkupplung als Ferrit-Preßkörper
auszuführen. Eine besonders vorteilhafte Ausführungsform
der vorliegenden Erfindung ergibt sich aber dadurch, daß
sowohl der Rotor als auch der Stator als Ferrit-Sinterkörper ausgeführt sind, wobei der Stator aus ölgetränktem
Sintereisen und der Rotor aus dampfbehandeltem Sintereisen
gefertigt ist. Der den Stator von außen umgebende Rotor
ist durch die Dampfbehandlung korrosionsgeschützt und seine mit dem Magnetanker zusammenarbeitende Reibfläche weist eine erhöhte Verschleißfestigkeit auf. Das ölgetränkte
Sintereisen des innenliegenden, im Rotor gelagerten Stators verbessert die Gleiteigenschaften des von Rotor und
Stator gebildeten Lagerpaares und erlaubt einen sich über
längere Zeit erstreckenden wartungsfreien Betrieb der
Kupplung.

In weiterer Ausgestaltung der Erfindung ist in fertigungstechnisch besonders günstiger Weise die auf den Stator
aufgesteckte Magnetspule auf einen aus Kunststoff gespritzten Trägerkörper aufgewickelt. Zweckmäßig ist ferner
an den Trägerkörper ein die Spule gegen Verdrehung
sichernder Fixieransatz angespritzt, welcher bei im Gerät
montierter Kupplung sowohl in eine Ausnehmung des Stators
als auch in eine gerätefeste Ausnehmung eingreift und dadurch den Stator in einfacher Weise am Gerät festlegt.

Gemäß einem weiteren Merkmal der Erfindung ist außerdem an
der dem Rotor zugewandten Seite des am Stator gelagerten
Trägerkörpers für die Magnetspule ein ringförmiger Lageransatz angeformt, welcher den die Spule tragenden rohrförmigen Teil des Stators in axialer Richtung überragt,
dadurch, daß der ohnehin nur einen Teil des Magnetflusses
aufnehmende, aus magnetisierbarem Werkstoff bestehende
Teil des Stators, welcher die Magnetspule trägt, dem Rotor
nicht direkt anliegt, sondern sich über einen Ansatz des
aus unmagnetisierbarem Kunststoff bestehenden Trägerkörpers für die Magnetspule am Rotor abstützt, wird die
zwischen Rotor und Stator während der Schaltzeiten der
Kupplung wirkende magnetische Anziehung noch weiter verkleinert, wodurch sich der Wirkungsgrad der Kupplung noch
weiter erhöht.

Schließlich ist noch in fertigungstechnisch besonders günstiger Weise der Magnetanker als Stanzteil aus magnetisierbarem Material ausgeführt und trägt mindestens einen angeprägten Zapfen zur Mitnahme des zweiten umlaufenden Teiles, und der Rotor ist mittels eines Sicherungsklemmringes aus Kunststoff am ersten umlaufenden Teiles befestigt.

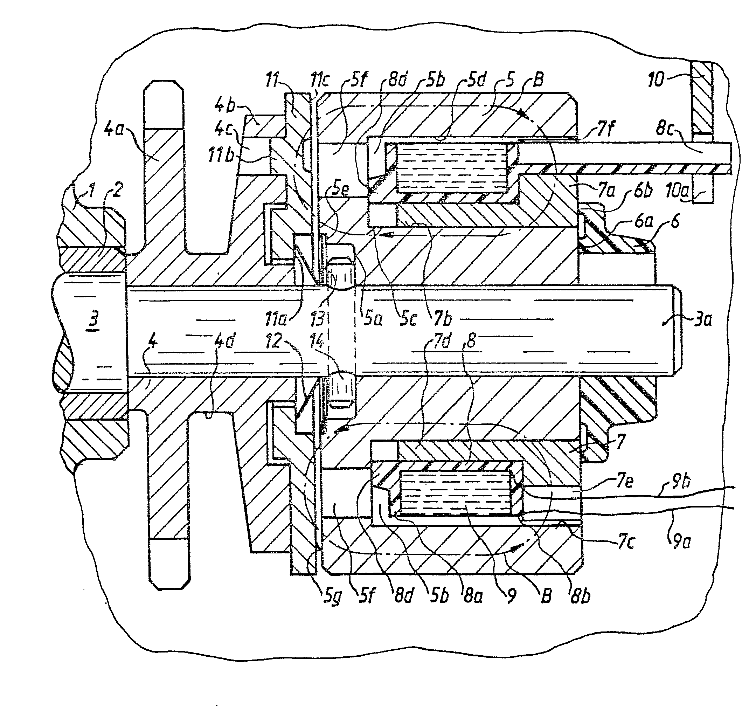

In der Zeichnung ist eine Ausführungsform der Erfindung beispielsweise dargestellt. Die einzige Figur zeigt einen Schnitt durch die erfindungsgemäße Magnetkupplung. Dabei trägt eine Geräteplatine 1 eine Lagerbuchse 2, in welcher eine angetriebene Achse 3 gelagert ist. Auf einen Ansatz 3 a der angetriebenen Achse 3 ist ein anzutreibendes Teil, im vorliegenden Fall ein anzutreibendes Kettenrad 4, aufgesteckt. Das Kettenrad 4 ist aus ölgetränktem Sintereisen gefertigt, damit es in der Zeit, in welcher es nicht mit der angetriebenen Welle 3 gekuppelt ist, gute Laufeigenschaften auf dieser Welle aufweist.

Durch den Ansatz 3 a der Welle 3 ist ein Fixierstift 14 gesteckt, dessen beide Enden in Ausnehmungen 5 a eines auf den Wellenansatz 3 a aufgeschobenen Rotors 5 eingreifen. Der Rotor 5 ist aus magnetisierbarem, zum Schutz gegen Korrosion und Verschleiß dampfbehandeltem Sintereisen gefertigt. Er wird auf dem Wellenansatz 3 a mittels eines handelsüblichen, aus Kunststoff bestehenden Sicherungsklemmringes 6 gehalten.

In einer ringförmigen Nut 5 b des Rotors 5 ist ein Stator 7 gelagert, welcher von der Nut 5 b U-förmig umschlossen wird. Am Stator 7 ist ein radialer Flansch 7 a ausgebildet, welcher so geformt ist, daß er die U-förmige Nut 5 b des Stators 5 nach außen hin abschließt. Der Stator 7 ist ferner so bemessen, daß seine Innenfläche 7 b mit der

CW 2252.6 PU/MU        - 5 -

inneren Begrenzungsfläche 5 c der Nut 5 b eine Lagerpaarung bildet, während die äußere Begrenzungsfläche 7 c des radialen Flansches 7 a des Stators 7 zu der äußéren Begrenzungsfläche 5 d der U-förmigen Nut 5 b einen definierten, wenn auch im Interesse des ungestörten Magnetflusses möglichst kleinen Abstand aufweist. Der Stator 7 ist ebenfalls aus magnetisierbarem Sintereisen gefertigt, wobei in diesem Falle zur Verbesserung der Lagereigenschaften das Sintereisen ölgetränkt ist.

Am Stator 7 ist ferner ein rohrförmiger Ansatz 7 d ausgebildet, auf den ein aus Kunststoff geformter Trägerkörper 8 für eine Magnetspule 9 aufgesteckt ist. Die Spule 9 ist in einen von zwei radialen Flanschen 8 a und 8 b des Trägerkörpers gebildeten Ringraum gewickelt. Die Anschlußdrähte 9 a und 9 b der Spule 9 sind durch eine Ausnehmung 7 e des Rotors 7 nach außen geführt. An den Trägerkörper 8 ist ein Fixieransatz 8 c angespritzt, welcher durch eine weitere Ausnehmung 7 f des Rotors 7 nach außen ragt und außerdem in eine Ausnehmung 10 a eines gerätefesten Teiles 10 eingreift. Sowohl der Stator 7 als auch die Spule 9 sind dadurch gegen Verdrehen gesichert. Die axiale Festlegung des Stators 7 nach der Außenseite der Nut 7 b übernimmt ein ringförmiger Rand 6 b des Sicherungsklemmringes 6.

Nach der Innenseite der U-förmigen Nut 5 b wird der Stator 7 durch einen an den Trägerkörper 8 angespritzen ringförmigen Ansatz 8 d abgestützt. Dieser ringförmige Ansatz 8 e ragt gegenüber dem rohrförmigen Teil 7 d des Stators 7 so weit vor, daß sich, wie im folgenden noch näher ausgeführt wird, zwischen dem Stator 7 und dem Rotor 5 keine nennenswerten magnetischen Anziehungskräfte in axialer Richtung entwickeln können.

An dem eingangs erwähnten, angetriebenen Teil 4 ist ein
Ansatz 4 a ausgebildet, auf welchem ein aus magnetisierbarem Blech geprägter Magnetanker 11 gelagert ist. In eine
ringförmige Ausnehmung 11 a des Ankers 11 ist eine Blattfeder 12 eingelegt, welche den Anker 11 gegen ein am umlaufenden Teil 4 angeformtes scheibenförmiges Teil 4 b
drückt. Die Blattfeder 12 stützt sich dabei nach der Gegenseite hin gegen eine Messingscheibe 13 ab, welche in
eine ringförmige Ausnehmung 5 e des Rotors 5 eingelegt
ist. Die Messingscheibe 13 dient einmal der Verringerung
der gleitenden Reibung zwischen der Blattfeder 12 und dem
Rotor 5 und soll zum anderen ein Einhaken der Blattfeder 12 an den Ausnehmungen 5 a verhindern. Der mittels der
Blattfeder 12 gegen den radialen Flansch 4 b des umlaufenden Teiles 4 gedrückte Anker 11 nimmt das umlaufende
Teil 4 mittels eines an den Anker 11 angeprägten Zapfens
11 b mit, welcher in eine Ausnehmung 4 c des Flansches 4 b
eingreift. Zwischen dem radialen Flansch 4 b und dem angetriebenen Kettenrad 4 a ist eine tiefe, ringförmige Nut
ausgebildet, welche verhindern soll, daß am Kettenrad haftendes Schmieröl sich über die Oberfläche des umlaufendes
Teiles 4 ausbreitet und dadurch zwischen die wirksamen
Reibflächen der Magnetkupplung gelangt.

An der dem Magnetanker zugekehrten Seite des Rotors 5 sind
an diesem schließlich noch Ausnehmungen 5 f ausgebildet,
welche nahezu über den gesamten Umfang des Rotors 5 reichen und nur an einzelnen Stellen von in geeigneter Weise
über den Umfang verteilten schmalen Stegen unterbrochen
sind. Diese in der Zeichnung nicht sichtbaren Stege sind
so dimensioniert, daß sie festigkeitsmäßig gerade ausreichen, um den durch die Ausnehmungen 5 f voneinander getrennten inneren und äußeren Teil des Rotors 5 sicher zusammenzuhalten. Die Wirkung der Ausnehmung 5 f auf den
Magnetfluß kann in bekannter Weise auch durch einen den
inneren und den äußeren Teil des Rotors verbindenden Ring

2.  Magnetkupplung nach Anspruch 1, dadurch gekennzeichnet, daß die die Magnetspule (9) umschließenden Teile
    des Stators (7) und des Rotors (5) einen Leiter von im
    wesentlichen konstantem Querschnitt für den Magnetfluß
    bilden.

3.  Magnetkupplung nach Anspruch 2, dadurch gekennzeichnet, daß die Breite des die U-förmige Nut (5 b) des
    Rotors (5) nach außen abschließenden radialen Flansches (7 a) des Stators (7) für sich allein etwa der
    vollen Breite des für den Magnetfluß rings um die
    Magnetspule zur Verfügung stehenden Querschnitts entspricht, während der die Spule tragende, sich rohrförmig in axialer Richtung erstreckende Statorteil
    (7 d) nur einen kleineren Teil des durch Stator und
    Rotor fließenden Magnetflusses aufnimmt.

4.  Magnetkupplung nach einem der Ansprüche 1 bis 3, dadurch gekennzeichnet, daß sowohl der Rotor (5) als
    auch der Stator (7) als Ferrit-Sinterkörper ausgeführt
    ist.

5.  Magnetkupplung nach Anspruch 4, dadurch gekennzeichnet, daß der Stator (7) aus ölgetränktem Sintereisen
    gefertigt ist.

6.  Magnetkupplung nach Anspruch 4 oder 5, dadurch gekennzeichnet, daß der Rotor (5) aus dampfbehandeltem Sintereisen gefertigt ist.

7.  Magnetkupplung nach einem der vorhergehenden Ansprüche, dadurch gekennzeichnet, daß die auf den Stator (7) aufgesteckte Magnetspule (9) auf einem aus
    Kunststoff gespritzten Trägerkörper (18) aufgewickelt
    ist.

CW 2252.6 PU/MU — 3 —

8. Magnetkupplung nach Anspruch 7, dadurch gekennzeichnet, daß an den Trägerkörper (8) ein die Spule (9) gegen Verdrehung sichernder Fixieransatz (8 c) angespritzt ist, welcher bei im Gerät montierter Kupplung
sowohl in eine Ausnehmung des Stators als auch in eine
gerätefeste Ausnehmung eingreift.

9. Magnetkupplung nach Anspruch 6 oder 7, dadurch gekennzeichnet, daß an der dem Rotor (5) zugekehrten Seite
des am Stator (7) gelagerten Trägerkörpers (8) für die
Magnetspule (9) ein ringförmiger Lageransatz (8 d) angeformt ist, welcher den die Spule tragenden rohrförmigen Teil (7 d) des Stators in axialer Richtung überragt.

10. Magnetkupplung nach einem der vorhergehenden Ansprüche, dadurch gekennzeichnet, daß der Magnetanker
(11) als Stanzteil aus magnetisierbarem Material ausgeführt ist und mindestens einen angeprägten Zapfen
(11 b) zur Mitnahme des zweiten umlaufenden Teiles
(14) trägt.

11. Magnetkupplung nach einem der vorhergehenden Ansprüche, dadurch gekennzeichnet, daß der Rotor (5)
mittels eines Sicherungsklemmringes (6) aus Kunststoff
an dem ersten umlaufenden Teil (3) befestigt ist.